# EUROPEAN PATENT SPECIFICATION

(11) **EP 1 692 673 B1**
(45) Date of publication and mention of the grant of the patent: **25.02.2009**
(21) Application number: 04821354.0
(22) Date of filing: 09.12.2004
(51) Int. Cl.: G08B 21/12, G01N 21/64, G01N 21/55, G01N 1/22

(54) **AUTONOMOUS SURVEILLANCE SYSTEM**
AUTONOMES ÜBERWACHUNGSSYSTEM
SYSTEME DE SURVEILLANCE AUTONOME

(30) Priority: 10.12.2003 US 528210 P
(43) Date of publication of application: 23.08.2006
(73) Proprietor: Smiths Detection Inc., Edgewood, MD 21040 (US)
(72) Inventor: HERMAN, Robert, Alan, Baltimore, MD 21237 (US)
(74) Representative: Price, Nigel John King
(86) International application number: PCT/US2004/041099
(87) International publication number: WO 2005/078674

(56) References cited:
- EP-A- 1 158 292
- US-A1- 2002 078 771
- US-A1- 2002 124 664
- US-A1- 2003 085 348
- DEPARTMENT OF DEFENSE: "Chemical and biological Defense Program. Annual report to Congress passage" CHEMICAL AND BIOLOGICAL DEFENSE PROGRAM. ANNUAL REPORT TO CONGRESS, March 2000 (2000-03), pages 1-272, XP002271878

## Description

### BACKGROUND OF THE INVENTION

The present invention relates generally to detection and identification of bioaerosols and, more particularly, to a system for classifying a biological particle prior to identifying the biological particle.

Infectious biological particles such as bacteria and viruses can be transferred from one organism (e. g. , a human or animal) to another via an airborne route. For example, biological particles can inadvertently become aerosolized into bioaerosols when a person speaks, coughs, or sneezes or during certain medical and dental procedures that generate particle-containing droplets. Biological particles can also exist, for example, in vaporized water from cooling towers, water faucets, and humidifiers ; in agricultural dust; and in other airborne organic materials.

In addition to bioaerosols that are produced inadvertently from common sources, bioaerosols can be generated intentionally. For example, individuals bent on harming others and disrupting society have demonstrated that hazardous biological particles, such as anthrax in micron-sized particles, can be spread in envelopes delivered through the postal system. Such particles can become airborne during processing in postal facilities or when a contaminated envelope is opened. For example, in October 2001, anthrax was discovered in mail processed by the United States Postal Service in Washington, D. C. , resulting in serious illness to postal employees and at least two deaths. In October 2001, anthrax was also discovered in the mail room and office buildings of the Unites States Capitol resulting in building closure and quarantine. Other methods of intentionally distributing and aerosolizing hazardous biological particles include, for example, dispersing particles through ventilation systems or by explosive release.

In order to protect humans and animals from illness caused by inhalation of hazardous bioaerosols, systems to monitor, detect, and identify bioaerosols exist. For example, automated collection and identification systems that employ wet-walled collectors or similar devices may be used. Another commonly used method employsdry filter devices (e. g. , air filters) to capture bioaerosol samples. The dry filter devices are manually collected and then analyzed.

Procedures for analyzing bioaerosol samples captured by wet-walled collectors and/or dry filter devices typically involve washing the collectors/filters using physical agitation, generating a liquid sample, preparing the liquid sample for analysis using a polymerase chain reaction (PCR) instrument, and viewing the liquid sample with a detector to determine an identity of the bioaerosol.

One disadvantage of conventional identification systems is that the PCR component of such systems has large multiplexing requirements. For example, to identify the bioaerosol, PCR assays for all possible biological agents must be executed, including assays for bacterial agents, fungal agents, viral agents, and toxic agents. Thus, a significant number of tests must be performed, and large amounts of reagents and consumables are required. As a result, such systems are not adapted for portability or real-time analysis and therefore are not well-suited for use by facility security professionals, military forces, and first responders, such as firefighters, police, emergency medical personnel, and HAZMAT teams, to determine whether a life threatening biohazard is present at locations on-site and in the field.

US 2002/124664 discloses a detection system in accordance with the precharacterizing section of claim 1 and a method in accordance with the precharacterizing section of claim 45.

### SUMMARY OF THE INVENTION

According to the present invention, there is provided a detection system. According to claim 1 and a method for analyzing airborne particles according to claim 45.

Preferred embodiments are claimed in the dependent claims.

It is to be understood that both the foregoing general description and the following detailed description are exemplary and explanatory only, and are not restrictive of the invention as claimed.

### BRIEF DESCRIPTION OF THE DRAWINGS

The accompanying drawings, which are incorporated in and constitute a part of this specification, illustrate exemplary embodiments of the invention and, together with the description, serve to explain principles of the invention.

FIG. 1 is a schematic illustration of an embodiment of a detection system according to the present invention.

FIG. 2 is a perspective view of a filtration device of an collector of the detection system of FIG. 1.

FIG. 3 is a perspective view of a substrate of a first device of the detection system of FIG. 1.

FIG. 4 is a schematic view of an identification module and a detector of a second device of the detection system of FIG. 1.

FIG. 5 is a perspective view of an embodiment of a second device of a detection system according to the present invention.

FIG. 6 is a perspective view of a test strip of an embodiment of a second device of a detection system according to the present invention.

FIG. 7 is a top plan view of an identification module of an embodiment of a second device of a detection system according to the present invention.

FIG. 8 is a perspective view of an enclosure of an embodiment of a detection system according to the present invention.

FIG. 9 is a block diagram of an embodiment of a method according to the present invention.

### DETAILED DESCRIPTION

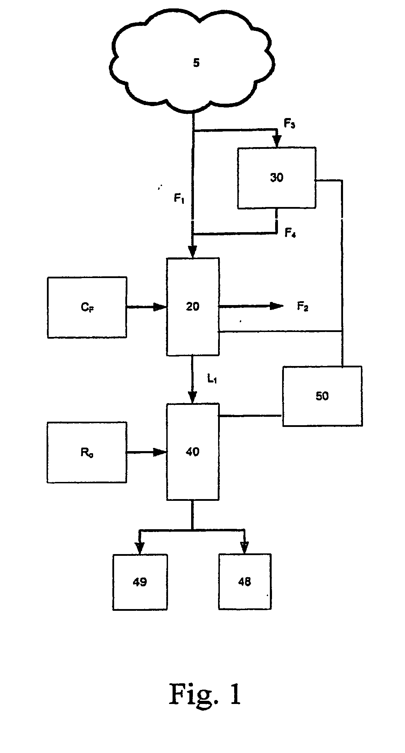

FIGS. 1-4 show an embodiment of a detection system 10 according to the present invention. The detection system 10 includes a collector 20, a first device 30, a second device 40, and a control system 50.

The collector 20 is configured to sample ambient air (e.g., environmental air) and to capture airborne (e.g., aerosolized) particles in the ambient air. For example, as shown in FIG. 1, a portion of an air sample 5 may be drawn into or forced through the collector 20 (e.g., by a fan or air pump) as a flow of air F₁. As the air sample 5 passes through the collector 20, aerosolized particles in the air sample 5 become entrained in the collector 20. The air sample 5 is then exhausted from the collector 20 as a flow of air F₂.

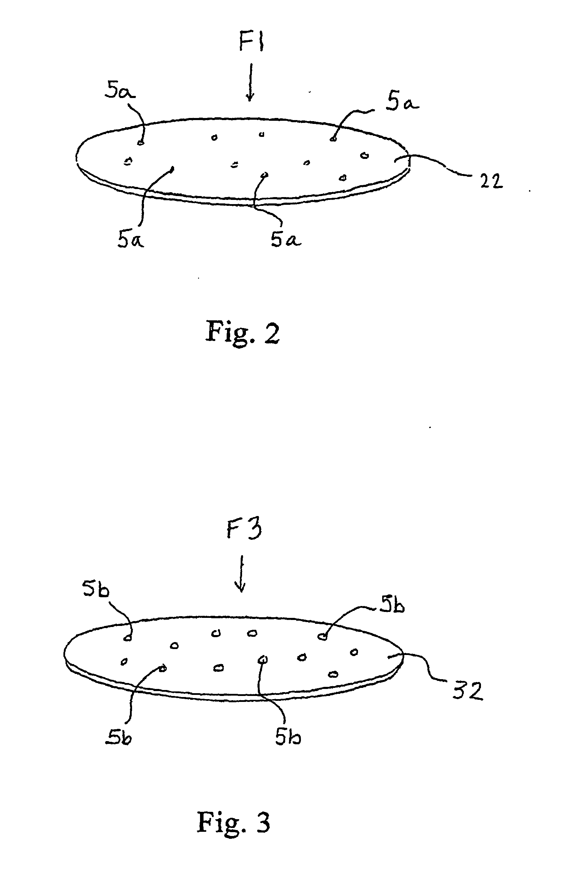

The collector 20 includes a filtration device 22 capable of collecting the particles. In one embodiment, the filtration device 22 is a dry filter device (shown in FIG. 2). The dry filter device may be, for example, an air filter. The dry filter device may be made of any material capable of capturing micron-sized particles, including biological particles such as cells, spores, pollen, mold, bacteria, viruses, toxins, funguses, and microorganisms. For example, the dry filter device may be a polyester felt filter, a porous membrane filter, or a glass fiber filter. The dry filter device may be configured as a single use filter or a continuous filter disposed, for example, on a roll of material that is dispensed from a canister, as described, for example, in U.S. Patent Application Serial No. 10/962,477, filed October 13, 2004, and U.S. Patent Application Serial No. 10/962,480, filed October 13, 2004. In another embodiment, the filtration device 22 of the collector 20 is a wet concentrator. Any commercially available wet concentrator may be used such as, for example, the SpinCon® Advanced Air Sampler from Scepter Industries, Inc.

As shown in FIG. 2, when the filtration device 22 is exposed to the flow of air F₁, aerosolized particles 5a in the air sample 5 become entrained in the filtration device 22. A sampling rate for the flow of air F₁ through the collector 20 may be, for example, in a range of approximately 400 to 500 liters per minute. A sampling duration for the flow of air F₁ through the coll ector 20 may be, for example, in a range of approximately 30 minutes to 8 hours. The duration of the sampling period may be set by software parameters in the control system 50. In an exemplary embodiment, the sampling rate is approximately 400 liters per minute, and the sampling duration is approximately 3 hours. Additionally, a pore size of the filtration device 22 may be adapted to capture particles that are capable of being respirated by humans and/or animals (i.e., respirable particles). For example, the filtration device 22 may be adapted to collect particles having a size of approximately 1 µm to approximately 10µm.

The captured particles 5a may be recovered from the filtration device 22 into a liquid sample L₁ by washing. Any known manual or automatic washing method may be used to recover the particles 5a. For example, in one embodiment, the filtration device 22 of the collector 20 is a wet concentrator (e.g., the SpinCon® Advanced Air Sampler from Sceptor Industries, Inc.), which collects airborne particles and automatically concentrates the particles in a liquid sample L₁. In another embodiment, a collection fluid F_{c} (e.g., water) may be supplied (e.g., by pumping) to the collector 20 (e.g., via external piping and/or channels in the detection system 10) until the filtration device 22 (e.g., a dry filter) is submerged in the collection fluid F_{c}. In this embodiment, washing of the filtration device 22 may be accomplished by any known method such as mechanical agitation, sonication, or percolation (i.e., bubbling or percolating a gas through the filtration device 22), as described, for example, in U.S. Patent Application Serial Nos. 10/962,477 and 10/962,480. As a result of the washing, the particles 5a are dislodged from the filtration device 22 and are transferred to the collection fluid thereby generating the liquid sample L₁. The liquid sample L₁ may then be transferred to the second device 40.

The first device 30 may also be configured to sample ambient air. Additionally, the first device 30 may be adapted to classify aerosolized particles in the ambient air into a class or category. For example, as shown in FIG. 1, the air sample 5 may be drawn into or forced through the first device 30 (e.g., by a fan or air pump) as a flow of air F₃. As the air sample 5 passes through the first device 30, aerosolized particles 5b are collected onto a substrate 32 as shown in FIG. 3. The substrate 32 may be, for example, a sensor surface. The substrate 32 may also be any suitable filtration medium such as, for example, any of the filtration devices discussed above in connection with the collector 20. The first device 30 may also include a virtual impactor to improve concentration of the particles 5b on the substrate 32. The air sample 5 is exhausted from the first device 30 as a flow of air F₄, which may be exhausted directly to the ambient environment or may be combined with the flow of air F₁ flowing into the collector 20. A sampling rate for the flow of air F₃ through the first device 30 may be, for example, in a range of approximately 1 to 10 liters per minute. In an exemplary embodiment, the first detector 30 is operated continuously to provide real-time to near-real-time analysis of particulates. The collected sample may be retained on the substrate 32 or washed into a liquid sample by any of the methods discussed above.

The first device 30 may also include a detector. The detector may be any suitable detector for detecting biological particles. In one embodiment, the detector is a spectrometer that utilizes, for example, fluorescence spectroscopy. In this embodiment, the detector is adapted to induce fluorescence of molecules (e.g., receptor molecules) in the collected sample. The detector reads the induced fluorescence and determines the class of the particles 5b based on the reading. The class is used to broadly categorize the particles 5b. The class includes the following classifications: "bacteria," "fungus," "toxin," and "virus." In this manner, the first device 30 preliminarily classifies the particles 5b thereby narrowing the possible identities of the particles 5b. For example, if the first device 30 classifies the particles 5b as toxin, all bacteria, funguses, and viruses are eliminated from consideration.

In an exemplary embodiment, the first device 30 is the Biological Detection System (BDS) with "smart trigger" technology developed by Echo Technologies, Inc. The BDS utilizes optical sensors adapted to detect and distinguish broad classes of agents including bacteria, spores, toxins, and viruses. Aerosol samples are impacted directly onto a sensor surface, and sensor chemistry is based on reactions between biological agents and fluorescent receptor molecules. The BDS may be operated without user intervention, and, because the aerosol samples are impacted directly onto the sensor surface, fluidics are not required.

The first device 30 may be connected to or integrated with other components of the detection system 10, such as the collector 20, the second detector 40, and/or the control system 50, in any known manner. Alternatively, the first device 30 may be a separate unit connected to the control system 50 by wiring or wireless remote control. In an exemplary embodiment the first device 30 is adapted to be handheld. For example, the first device 30 may have a height of approximately 50 mml (2 inches), a width of approximately 50 mml (2 inches), and a length of approximately 200 mml (8 inches). The detection system 10 may also include multiple first devices 30 and/or multiple second devices 40 that can each be deployed in a different location so that the detection system 10 provides coverage for a broad area.

The first device 30 may be configured to classify the particles 5b in real-time or near-real-time. For example, the first device 30 and/or the control system 50 may include software, algorithms and/or databases that enable the first device 30 to detect and classify the particles 5b in approximately 2 minutes or less. Thus, the first device 30 may be adapted to provide rapid preliminary genetic detection. Moreover, because the first device 30 determines a broad class to which a particle belongs (rather than determining whether the particle is a specific organism or agent), the first device 30 is well suited for environments that include unknown or genetically modified airborne particles (e.g., bioaerosols), which could be missed by sensors designed to detect a specific organism or agent. Further, the classification provided by the first device 30 reduces multiplexing requirements for tests performed by the second device 40. For example, if the first device 30 detects a bacterial agent (i.e., "bacteria"), only tests (e.g., PCR tests) for bacterial agents will be performed by the second device 40. Accordingly, the number of analyses performed by the second device 40 is reduced thereby reducing the amount of consumables required for testing, the analysis time, and the operational cost.

The second device 40 may be configured to determine an identity of the particles 5a contained in the liquid sample L₁ (e.g., reaction mixture) generated by the collector 20. In one embodiment, the second device 40 receives the liquid sample L₁ from the collector 20 and prepares the liquid sample L₁ for analysis (e.g., by lysing, purifying, and/or adding reaction fluids R₀ to the liquid sample L₁). The second device 40 then analyzes the liquid sample L₁ to determine an identity of the particles 5a. For example, the second device 40 may be adapted to test the liquid sample L₁ for bacterial agents (e.g., Bacillus anthracia (anthrax), Vibrio cholerae (cholera), Burkholderia mallei (glanders), Yersinia pestis (plague), Francisella tularensis (tularemia), Salmonella typhi (typhoid fever)); viral agents (e.g., variola virus (the virus that causes smallpox), Venezuelan equine encephalitis (VEE) virus, western equine encephalitis (WEE) virus, eastern equine encephalitis (EEE) virus, Ebola virus); toxic agents (e.g., ricin, staphylococcal enterotoxin B (SEB), botulinum toxin, trichothecene mycotoxins); and/or fungal agents. Fungal agents (e,g., spores) are common in ambient conditions and typically contribute to false alarms. Accordingly, incorporating a fungal agent class (or channel) in the first device 30 may reduce false alarms and therefore reduce overall system lifecycle costs. In this manner, the second device 40 may be used to identify the particles 5a.

The second device 40 may be adapted to receive the liquid sample L₁ from the collector 20. The liquid sample L₁ may be transferred to the second device 40, for example, through microfluidic channels in the detection system 10 under the force of a pump. Alternatively, the liquid sample L₁ may be transferred to a reaction vessel or sample holder that is configured to be inserted into or installed in the second device 40. The sample holder may be any known sample holder such as, for example, the sample holders described in U.S. Patent Application Serial No. 10/737,037, filed December 4, 2003, and U.S. Patent Application Serial No. 10/852,684, filed May 25, 2004. The second device 40 may also be configured to store at least a portion of the liquid sample for archival purposes. For example, the second device 40 may include storage chambers 48 for independent archival storage of liquid samples from previous sample periods. In an exemplary embodiment, the second device 40 includes storage capacity for samples from the previous five days of operation (e.g., approximately 40 samples). Additionally, the second device 40 may include waste chambers 49, which may be periodically purged and/or cleaned either manually or automatically in any known manner.

The liquid sample L₁ may be processed in any known manner either prior to or after being transferred to the second device 40. For example, reaction fluids R_{c} such as reagents, buffers, and/or primers may be added to the liquid sample L₁. The liquid sample may also be subjected to a lysis process to recover nucleic acid from the particles 5a in the liquid sample L₁. The particles 5a may be lysed in any known manner such as by sonication, mechanical agitation, homogenization, or percolation. In one embodiment, the collector 20 includes a sonicator, a mechanical agitator, or a percolator as described, for example, in U.S. Patent Application Serial No. 10/962,480. In another embodiment, the second device 40 includes a sonication module for cell lysis. The sonication module may be, for example, a low-power, microfluidic sonicator capable of lysing bacterial spores in 1 ml samples in approximately 60 seconds. Any suitable commercial sonication module may be used such as a sonication module produced by MicroFluidic Systems, Inc. or Pacific Northwest National Laboratories.

After the lysis process liberates the nucleic acids from the particles 5a, the nucleic acids may optionally be purified (concentrated) in any known manner into a second liquid sample (a concentrated sample) to improve sensitivity. In one embodiment, the collector 20 includes a second filtration device for purification of the nucleic acids as described, for example, in U.S. Patent Application Serial No. 10/962,477. In another embodiment, the second device 40 includes a purification module for capturing, washing, and eluting small volumes of highly concentrated nucleic acids. The purification module may include, for example, a purification chip having a micromachined silicon structure consisting of micropillars, which create a high surface area within a chamber (e.g., a 12 µl chamber). Sample concentration improves sensitivity and permits the detection system 10 to use smaller amounts of sample and reagent(s) for each test.

The second device 40 may be adapted for handling and processing the liquid sample L₁ (or the concentrated liquid sample) and other fluids such as reagents, buffers, primers, and waste. For example, the second device 40 may include mucrofluidic manifolds and pumps for fluid handling and chambers for fluid mixing, processing, and analysis. The second device 40 may utilize any known fluid processing and handling system such as, for example, the system described in U.S. Patent No. 6,374,684. The second device 40 may also include a thermal cycler for testing the liquid sample L₁ and/or for amplifying the nucleic acids in the liquid sample L₁. The thermal cycler may be any known thermal cycler, such as the thermal cycler described, for example, in U.S. Patent Application Serial No. 10/837,745, filed May 4, 2004. In an exemplary embodiment, the second device 40 includes an array of thermal cyclers disposed in parallel so that multiple tests can be performed (independently or simultaneously) on aliquots of the liquid sample.

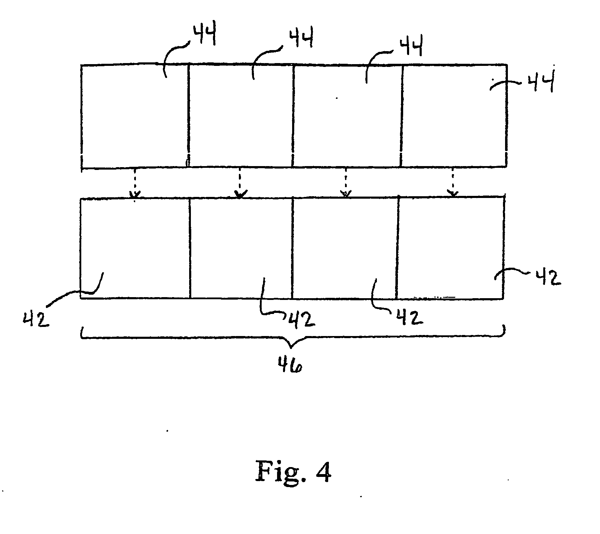

The second device 40 may be configured to test the liquid sample L₁ (or the concentrated liquid simple) to determine an identity of the particles 5a in the liquid sample. For example, as shown in FIG. 4, the second device 40 may include an identification module 42 for testing the liquid sample and an imaging source or detector 44 configured to read the results of the test. The second device 40 may include a single identification module 42. Alternatively, the second device 40 may include an array 46 of identification modules 42, which may be disposed in parallel and adapted to operate independently or simultaneously. Thus, the array 46 enables the second device 40 to analyze multiple aliquots of the liquid sample independently, at different timers, or at the same time. In an exemplary embodiment, the second device includes an array of at least twenty identification modules 42 to enable , simultaneous analyses for at least twenty biological agents. Similarly, the detector 44 may include multiple detectors 44 so that the results of multiple tests may be read simultaneously. Alternatively, a single detector 44 adapted to read single and/or multiple test results may be used. Thus, the second device 40 may be adapted to conduct tests and analyze test results for several different biological agents simultaneously to thereby reduce the time required to identify the particles 5a.

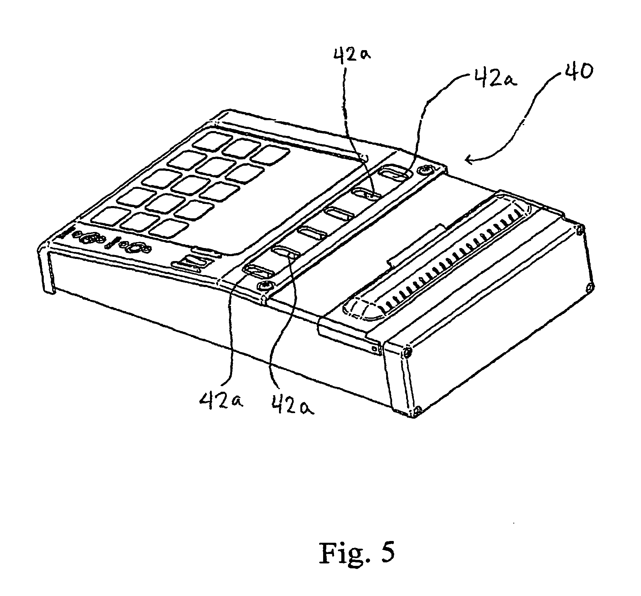

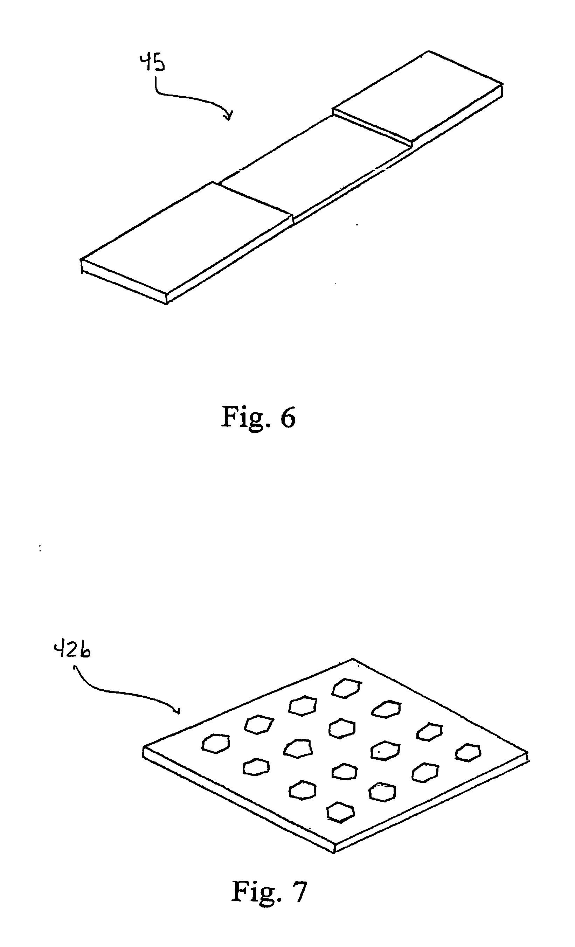

According to one embodiment, the identification module 42 may include a polymerase chain reaction (PCR) module 42a, as shown in FIG. 5. In an exemplary embodiment, the PCR module 42a incorporates the above-described thermal cycler. The PCR module 42a may be configured to perform any known PCR test for determining the identity of the particles 5a. For example, the test performed by the PCR module 42a may be a lateral flow antibody assay. In one embodiment, the lateral flow antibody assay is performed using a lateral flow strip (shown in FIG. 6) as is well known. In operation, the liquid sample is applied to the lateral flow strip in any known manner. For example, the liquid sample may be placed in contact with an absorbent pad disposed on the lateral flow strip and wicked onto the strip. After a predetermined test interval (e.g., 20 minutes), the detector 44 reads the lateral flow strip to determine whether a specific biological agent is present in the liquid sample. The detector 44 may be any suitable detector such as, for example, a photomultiplier tube and/or a CCD camera.

According to another embodiment, the identification module may be configured to perform a competitive antibody-antigen assay, and the detector 44 may be a luminometer configured to read a result of the competitive antibody-antigen assay.

The identification module 42 is not limited to the above-described tests but may be configured to perform any suitable test or assay, such as an assay for the detection of any bacteria, fungus, toxin, or virus. In one embodiment, the assay is an Immuno-PCR (I-PCR) assay developed by Smiths Detection Inc., which provides assays for the detection of toxins such as, for example, ricin, SEB, and botulinum toxin. The I-PCR assay may be modified to provide assays for various toxins by replacing an identification antibody (e.g., ricin) in the I-PCR assay with a different antibody (e.g., SEB or botulinum).

According to another embodiment, the identification module 42 of the second device 40 may include a surface plasmon resonance (SPR) chip 42b, as shown in FIG. 7. In operation, the liquid sample is flowed over the SPR chip so that the liquid sample contacts receptors immobilized on the SPR chip. After a predetermined test interval (e.g., 20 minutes), the detector 44 reads the SPR chip to determine whether a specific biological agent is present in the liquid sample. The detector 44 may be any suitable detector such as, for example, a surface plasmon resonance detector.

In an exemplary embodiment, the test(s) performed by the second device 40 are selected by the control system 50 based on the class provided by the first device 30. Thus, the control system 50 determines whether the second device 40 performs tests for bacterial agents, viral agents, fungal agents, or toxic agents on the particles 5a depending on the classification of the particles 5b. For example, if the first device 30 classifies the particles 5b as bacteria, the control system 50 instructs the second device 40 to perform only tests for bacterial agents on the particles 5a. Similarly, if the first device 30 classifies the particles 5b as virus, the control system 50 instructs the second device 40 to perform only tests for viral agents. If the first device 30 classifies the particles 5b as fungus, the control system 50 instructs the second device 40 to perform only tests for fungal agents. If the first device 30 classifies the particles 5b as toxin, the control system 50 instructs the second device 40 to perform only tests for toxic agents. In another embodiment, if the first device 30 classifies the particles 5b as non biological, interferent, and/or harmless, the control system 50 instructs the second device 40 not to test the particles 5a.

The second device 40 may be configured to determine the identity of the particles 5a in a relatively short time. For example, the second device 40 and/or the control system 50 may include software algorithms and/or databases that enable the second device 40 to detect and classify the particles 5a in approximately one hour or less after the particles 5a are captured by the collector 20. In an exemplary embodiment, the second device includes a configuration of the BIO-SBEQ® developed by Smiths Detection Inc. The BIO-SEEQ^{®} (shown in FIG. 5) is a handheld instrument that may be configured to utilize PCR to identify biological agents. In one embodiment, the instrument can analyze six independent samples for the presence of harmful pathogens, weighs approximately 3 Kg/l (6.5 lbs) (including commercially available batteries), and has a size of less than approximately 0.33m³ (1 ft³). In another embodiment, the second device 40 incorporates an automated, microfluidic platform developed by MicroFluidic systems, Inc.

The control system 50 may be configured (e.g., programmed) to monitor and control operation of the detection system 10 and to analyze data obtained from the first device 30 and the second device 40. In an exemplary embodiment, the control system 50 includes software that enables the control system 50 to select the test(s) to be performed by the second device 40 based on the class provided by the first device 30 as described above. The control system 50 may also be programmed to initiate testing in the second device 40 after the first device 30 determines the classification of the particles 5b. Additionally, the control system 50 may be adapted to perform general control functions such as, for example, controlling the intake of air into the collector 20 and the first device 30; controlling delivery of the collection fluid F_{c} to the collector 20 and washing of the filtration device 22; controlling transfer of the liquid sample L₁ from the collector 20 to the second device 40; controlling processing and analysis of the liquid sample L₁ in the second device 40; and/or controlling any other operational functions.

The control system 50 may include any known computer hardware and/or software, including, for example, a microprocessor. The control system 50 may also include a graphical user interface for displaying information and user input devices, such as a keyboard and/or a mouse, to enable a user to interact with the control system 50. The control system 50 may be sized for portability and may include, for example, a laptop computer and/or a handheld personal data assistant. The control system 50 may also include a wireless communication system so that the detection system 10 may be controlled remotely. The control system 50 may additionally include a power source, which may be any known power source such as, for example, battery or may utilize line voltage.

According to one embodiment, the control system 50 is configured to collect data from each sensor system included in the detection system 10. For example, the control system 50 may be adapted to receive information (e.g., the class of the particles 5b) from the detector in the first device 30 and information (e.g., the identity of the particles 5a) from the detector 44 in the second device 40. Based on the information received, the control system 50 may be programmed to trigger an alarm and/or to initiate monitoring and/or tests at any other system. For example, when the control system 50 receives a signal from the first device 30 that the category is "bacteria," the control system 50 may issue a command to the second device 40 to test the liquid sample L₁ for bacterial agents. In one embodiment, a first aliquot of the liquid sample may be subjected to a test for a first bacterial agent (e.g., anthrax), a second aliquot of the liquid sample may be subjected to a test for a second bacterial agent (e.g., cholera), and a third aliquot of the liquid sample may be subjected to a test for a third bacterial agent (e.g., plague).

The control system 50 may be configured for normal operation during which sampling and analyses are conducted on a predetermined schedule. Alternatively, normal operating conditions may include continuously operating the collector 20 concurrently with the first device 30. If the first device 30 detects a possible hazard, the collector 20 may be instructed to transfer the liquid sample to the second device 40 for analysis. If a possible hazard is not detected by the first device 30, the detection system 10 continues under normal operating conditions. Upon detection of a potentially harmful class of particle (i.e., a presumptive positive result), the control system 50 may command all surrounding systems (e.g., the detectors 44 in the second device 40) to initiate testing. Thus, the control system 50 may be adapted to automatically respond to perceived threats thereby reducing the time to identify the perceived threat and to notify first responders of the threat. As a result, contaminated areas may be effectively evacuated and dispersion of harmful bioaerosols may be reduced.

In an exemplary embodiment, the control unit 50 includes a communication network based on the SensorView™ platform developed by Ricciardi Technologies, Inc. (RTI), which enables full remote operation of the detection system 10. The SensorView™ platform is a command, control, and monitoring system for management of distributed sensors. For example, the SensorView™ platform may be adapted to provide plug and play capability to connect a variety of sensor types over different interfaces including RS-232, RS-422, RS-485, and Ethernet. The platform enables a user to command, control, and monitor (locally and remotely) multiple sensors of various types and may also include GPS and meteorological sensor options to provide real-time location and meteorological data associated with a detected incident The SensorView™ platform may additionally provide secure, encrypted wireless communications and secure web access.

The detection system 10 may be configured to be portable and/or mobile so that the detection system 10 may be transported from one location to another. For example, a size of the detection system 10 may be approximately 6 cubic feet or less. Additionally, a weight of the detection system 10 may be in a range of about 40 pounds to about 60 pounds. In an exemplary embodiment, the weight is about 50 pounds or less. Thus, the device 10 may be configured to have a physical size and weight that enable a user to transport the device 10 to various locations. For example, the detection system 10 may be mounted on a vehicle, such as a military vehicle, police car, fire truck, ambulance, or HAZMAT vehicle. The detection system 10 may also be installed on a dolly having casters and/or wheels so that a user may roll the detection system 10 from one location to another. Alternatively, the detection system 10 may be installed at a stationary location such as, for example, an internal or external location of a building, rail station, or metropolitan transportation system or in an external (out of doors or outside) location such as a military field location, amusement part, or urban sector.

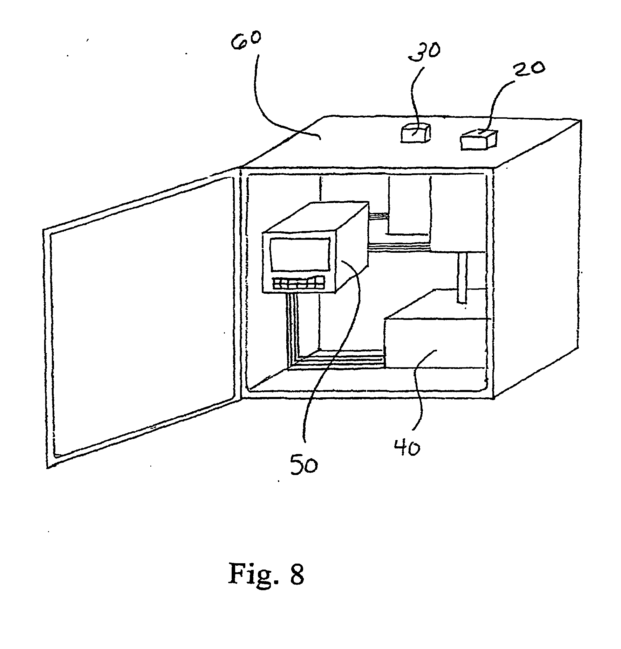

The detection system 10 may also include an enclosure 60. As shown in FIG. 8, the enclosure 60 houses at least a portion of the detection system 10. For example, in one embodiment the first device 30 and the second device 40 are housed within the enclosure 60, while the collector 20 is mounted external to the enclosure 60. In an exemplary embodiment, all components of the detection system 10 are housed in the enclosure 60. The size of the enclosure 60 may be varied depending on the number of components that will be housed in the enclosure. For example, a width of the enclosure 60 may be in a range of approximately 24 to 36 inches; a depth of the enclosure 60 may be in a range of approximately 24 to 36 inches; and a height of the enclosure 60 may be in a range of approximately 24 to 36 inches. Additionally, the enclosure 60 may be sealed by any known means including caulking, insulation, and other sealing mechanisms. The enclosure 60 may include multiple enclosures to house the various components of the detection system 10. For example, when the components of the detection system 10 are distributed in various locations (e.g., multiple first devices 30 and/or multiple second devices 40 each disposed at a different location), each distributed component may be housed in a separate enclosure. In an exemplary embodiment, the enclosure 60 is a NEMA-4 rated environmental enclosure.

The enclosure 60 may also include sensors, such as temperature and humidity sensors, and an environmental control system. The environmental control system may be any known heating, ventilation, and air conditioning (HVAC) unit such as, for example, a heater, an air conditioner (cooling unit), a humidifier, a dehumidifier, and/or a particulate filtration unit, such as an environmental control system supplied by Thermoelectric Cooling America Corporation. The control unit 50 may be configured to monitor and control an environment in the enclosure 60. For example, when data from a temperature sensor (e.g., thermistor, thermocouple, RTD) indicates that a temperature in the enclosure 60 has fallen below a predetermined value, a heating unit may be activated. Similarly, when data from the temperature sensor indicates that the temperature in the enclosure 60 exceeds a predetermined value, a cooling unit may be activated. The control unit 50 may be configured to maintain the temperature in the enclosure in a range of approximately 10 °C to 30 °C. In an exemplary embodiment, the temperature in the enclosure is maintained at approximately 18 °C.

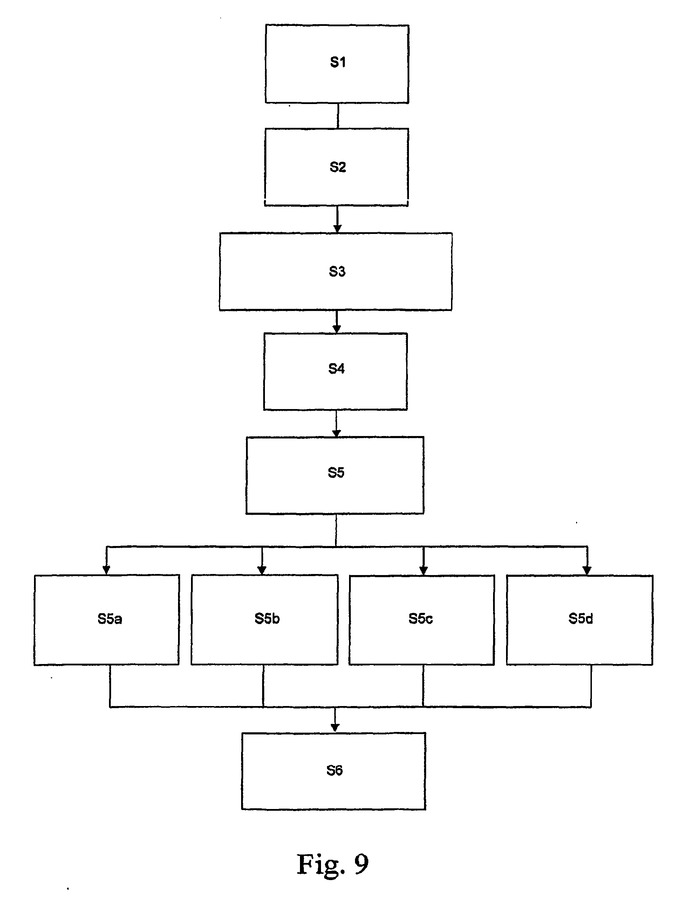

In operation, according to an embodiment of the present invention, a method for analyzing an aerosolized particle using the detection system 10 includes the following steps, which are shown in FIG. 9. In step S1, ambient air is sampled by the collector 20 and the first device 30. In step S2, a first particle (e.g., a particle 5a) is captured by the collector 20. In step S3, the collector 20 generates a liquid sample that includes the first particle. In step S4, the first device 30 analyzes a second particle (e.g., a particle 5b) from the ambient air to determine a classification of the second particle. The classification includes "bacteria," "fungus," "virus," or "toxin." In step S5, the control system 50 selects a test to determine an identity of the first particle based on the classification of the second particle. For example, in step S5a, if the classification is "bacteria," a PCR assay for a bacterial agent is selected. In step S5b, if the classification is "fungus," a PCR assay for a fungal agent is selected. In step S5c, if the classification is "virus," a PCR assay for a viral agent is selected. In step S5d, if the classification is "toxin," a PCR assay for a toxic agent is selected. In step S6, the device 40 subjects the liquid sample to the selected test.

Thus, the above-described embodiments provide a detection system and method for collecting, analyzing, and identifying unknown airborne particles. The detection system may be configured to reduce test multiplexing requirements by classifying collected particles prior to initiating a test to identify the collected particles. As a result, fewer tests are performed and smaller amounts of reagents and consumables are required. Accordingly, the detection system may be adapted for portability and/or real-time analysis and therefore is well-suited for use by facility security professionals, military forces, and first responders to determine whether a life threatening biohazard is present at locations on-site and in the field.

Given the disclosure of the present invention, one versed in the art would appreciate that there may be other embodiments and modifications within the scope of the invention. Accordingly, all modifications attainable by one versed in the art from the present disclosure within the scope of the present invention are to be included as further embodiments of the present invention. The scope of the present invention is to be defined as set forth in the following claims.

## Claims

1. A detection system (10), comprising:
a first device (30) for determining a class of first particles (5b) contained in an aerosol;
a collector (20) for capturing second particles (5a) contained in said aerosol;
a second device (40) for determining an identity of said second particles (5a) captured by said collector (20); and
a control system (50) configured to select a test to be performed by the second device based on the class determined by the first device;
**characterised in that:**
the first device is configured to select the class from the group consisting of bacteria, fungus, toxin, and virus.

2. The detection system of claim 1, wherein the first and second particles are biological particles.

3. The detection system of claim 1, wherein the detection system is configured to be portable.

4. The detection system of claim 1, wherein the detection system is configured to be mounted to a vehicle.

5. The detection system of claim 1, wherein the detection system is a handheld detection system.

6. The detection system of claim 1, wherein the detection system is configured to be mounted to a stationary object.

7. The detection system of claim 1, wherein the detection system is configured to be installed in a building.

8. The detection system of claim 1, wherein the detection system is configured to be installed in an out of doors location.

9. The detection system of claim 1, wherein a size of the detection system is approximately 0.17m³ or less.

10. The detection system of claim 1, wherein the collector is configured to sample ambient air.

11. The detection system of claim 1, wherein the collector is configured to capture respirable particles.

12. The detection system of claim 1, wherein the collector is configured to collect particles having a size in a range from approximately 1 µm to approximately 10 µm.

13. The detection system of claim 1, wherein the collector includes a wet concentrator.

14. The detection system of claim 1, wherein the collector includes a dry filter (22).

15. The detection system of claim 14, further comprising a mechanism for automatically washing the dry filter.

16. The detection system of claim 1, wherein the collector is configured to generate a liquid sample containing the second particles.

17. The detection system of claim 16, wherein the collector is configured to provide the liquid sample to the second device.

18. The detection system of claim 1, wherein the first device is configured to sample ambient air.

19. The detection system of claim 1, wherein the first device is configured to induce fluorescence of the first particles and to analyze the induced fluorescence to determine the class of the first particles.

20. The detection system of claim 1, wherein the first device is configured to determine the class of the first particles in approximately 2 minutes or less.

21. The detection system of claim 1, wherein the second device includes a polymerase chain reaction module.

22. The detection system of claim 21, wherein the control system is configured to select a polymerase chain reaction test for bacterial agents when the first device determines that the class of the first particles is bacteria, wherein the control system is configured to select a polymerase chain reaction test for fungal agents when the first device determines that the class of the first particles is fungus, wherein the control system is configured to select a polymerase chain reaction test for viral agents when the first device determines that the class of the first particles is virus, and/or wherein the control system is configured to select a polymerase chain reaction test for toxic agents when the first device determines that the class of the first particles is toxin.

23. The detection system of claim 21, wherein one of the tests selected by the control system includes a polymerase chain reaction test for bacterial agents, a polymerase chain reaction test for fungal agents, a polymerase chain reaction test for viral agents, and/or a polymerase chain reaction test for toxic agents.

24. The detection system of claim 1, wherein the second device includes an array of polymerase chain reaction modules.

25. The detection system of claim 24, wherein the polymerase chain reaction modules are capable of operating simultaneously.

26. The detection system of claim 24, wherein the polymerase chain reaction modules are capable of operating independently.

27. The detection system of claim 1, wherein the second device is configured to perform a lateral flow antibody assay.

28. The detection system of claim 27, wherein the second device includes a lateral flow strip.

29. The detection system of claim 28, wherein the second device includes an imaging source (44) configured to read the lateral flow strip.

30. The detection system of claim 29, wherein the imaging source includes a photomultiplier tube and/or a CCD camera.

31. The detection system of claim 28, wherein the control system is configured to select the lateral flow strip based on the class determined by the first device.

32. The detection system of claim 1, wherein the second device is configured to perform a competitive antibody-antigen assay.

33. The detection device of claim 32, wherein the second device includes a luminometer configured to read a result of the competitive antibody-antigen assay.

34. The detection system of claim 32, wherein the control system is configured to select the competitive antibody-antigen assay based on the class determined by the first device.

35. The detection system of claim 1, wherein the second device includes a surface plasmon resonance chip.

36. The detection system of claim 35, wherein the control system is configured to select the surface plasmon resonance chip based on the class determined by the first device.

37. The detection system of claim 1, wherein the second device is configured to determine the identity of the second particles in approximately one hour or less after the second particles is captured by the collector.

38. The detection system of claim 1, wherein the control system is configured to control operation of the detection system.

39. The detection system of claim 1, wherein the control system includes a wireless communication system for remote control of the detection system.

40. The detection system of claim 1, wherein the control system is configured to initiate the test in the second device after the first device determines the class of the first particles.

41. The detection system of claim 1, further comprising an enclosure for enclosing at least a portion of the detection system.

42. The detection system of claim 41, wherein the control system is configured to control a temperature in the enclosure.

43. The detection system of claim 41, wherein the control system is configured to maintain a temperature in the enclosure in a range of approximately 10°C to 30°C.

44. The detection system of claim 42, wherein the control system is configured to maintain a temperature in the enclosure at approximately 18°C.

45. A method for analyzing airborne particles, comprising:
sampling ambient air;
analyzing first particles from the ambient air to determine a class of the first particles; capturing second particles from the ambient air;
generating a liquid sample that includes the second particles;
selecting a test to determine an identity of the second particles based on the class of the first particles;
subjecting the liquid sample to the selected test;
**characterised in that:**
the class is selected from the group consisting of bacteria, fungus, virus, and toxin.

46. The method of claim 45, further comprising performing a polymerase chain reaction assay for a bacterial agent when the class is bacteria, performing a polymerase chain reaction assay for a fungal agent when the class is fungus, performing a polymerase chain reaction assay for a viral agent when the class is virus, and performing a polymerase chain reaction assay for a toxic agent when the class is toxin.

## Patentansprüche

1. Detektionssystem (10), welches umfasst:
eine erste Vorrichtung (30) zum Ermitteln einer Klasse von in einem Aerosol enthaltenen ersten Partikeln (5b);
einen Kollektor (20) zum Auffangen von in dem Aerosol enthaltenen zweiten Partikeln (5a);
eine zweite Vorrichtung (40) zum Ermitteln einer Identität der von dem Kollektor (20) aufgefangenen zweiten Partikel (5a); und
ein dafür ausgelegtes Steuersystem (50), einen Test auszuwählen, der von der zweiten Vorrichtung basierend auf der von der ersten Vorrichtung ermittelten Klasse durchzuführen ist;
**dadurch gekennzeichnet, dass:**
die erste Vorrichtung dafür ausgelegt ist, die Klasse aus der aus Bakterien, Pilz, Toxin und Virus bestehenden Gruppe auszuwählen.

2. Detektionssystem nach Anspruch 1, **dadurch gekennzeichnet, dass** die ersten und zweiten Partikel biologische Partikel sind.

3. Detektionssystem nach Anspruch 1, **dadurch gekennzeichnet, dass** das Detektionssystem dafür ausgelegt ist, tragbar zu sein.

4. Detektionssystem nach Anspruch 1, **dadurch gekennzeichnet, dass** das Detektionssystem dafür ausgelegt ist, an einem Fahrzeug angebracht zu werden.

5. Detektionssystem nach Anspruch 1, **dadurch gekennzeichnet, dass** das Detektionssystem ein Detektionssystem-Handgerät ist.

6. Detektionssystem nach Anspruch 1, **dadurch gekennzeichnet, dass** das Detektionssystem dafür ausgelegt ist, an einem stationären Objekt angebracht zu werden.

7. Detektionssystem nach Anspruch 1, **dadurch gekennzeichnet, dass** das Detektionssystem dafür ausgelegt ist, in einem Gebäude installiert zu werden.

8. Detektionssystem nach Anspruch 1, **dadurch gekennzeichnet, dass** das Detektionssystem dafür ausgelegt ist, im Freien aufgebaut zu werden.

9. Detektionssystem nach Anspruch 1, **dadurch gekennzeichnet, dass** eine Größe des Detektionssystems ungefähr 0,17 m³ oder weniger beträgt.

10. Detektionssystem nach Anspruch 1, **dadurch gekennzeichnet, dass** der Kollektor dafür ausgelegt ist, Proben der Umgebungsluft zu nehmen.

11. Detektionssystem nach Anspruch 1, **dadurch gekennzeichnet, dass** der Kollektor dafür ausgelegt ist, lungengängige Partikel aufzufangen.

12. Detektionssystem nach Anspruch 1, **dadurch gekennzeichnet, dass** der Kollektor dafür ausgelegt ist, Partikel mit einer Größe in einem Bereich von etwa 1 µm bis etwa 10 µm aufzufangen.

13. Detektionssystem nach Anspruch 1, **dadurch gekennzeichnet, dass** der Kollektor einen Nasskonzentrator umfasst.

14. Detektionssystem nach Anspruch 1, **dadurch gekennzeichnet, dass** der Kollektor einen Trockenfilter (22) umfasst.

15. Detektionssystem nach Anspruch 14, welches weiterhin einen Mechanismus zum automatischen Waschen des Trockenfilters umfasst.

16. Detektionssystem nach Anspruch 1, **dadurch gekennzeichnet, dass** der Kollektor dafür ausgelegt ist, eine flüssige Probe zu erzeugen, die die zweiten Partikel enthält.

17. Detektionssystem nach Anspruch 16, **dadurch gekennzeichnet, dass** der Kollektor dafür ausgelegt ist, die flüssige Probe der zweiten Vorrichtung zur Verfügung zu stellen.

18. Detektionssystem nach Anspruch 1, **dadurch gekennzeichnet, dass** die erste Vorrichtung dafür ausgelegt ist, Proben der Umgebungsluft zu nehmen.

19. Detektionssystem nach Anspruch 1, **dadurch gekennzeichnet, dass** die erste Vorrichtung dafür ausgelegt ist, eine Fluoreszenz der ersten Partikel zu induzieren und die induzierte Fluoreszenz zu analysieren, um die Klasse der ersten Partikel zu ermitteln.

20. Detektionssystem nach Anspruch 1, **dadurch gekennzeichnet, dass** die erste Vorrichtung dafür ausgelegt ist, die Klasse der ersten Partikel in etwa 2 Minuten oder weniger zu ermitteln.

21. Detektionssystem nach Anspruch 1, **dadurch gekennzeichnet, dass** die zweite Vorrichtung ein Polymerasekettenreaktionsmodul umfasst.

22. Detektionssystem nach Anspruch 21, **dadurch gekennzeichnet, dass** das Steuersystem dafür ausgelegt ist, einen Polymerasekettenreaktionstest für bakterielle Stoffe auszuwählen, wenn die erste Vorrichtung ermittelt, dass die Klasse der ersten Partikel Bakterien ist, wobei das Steuersystem dafür ausgelegt ist, einen Polymerasekettenreaktionstest für pilzartige Stoffe auszuwählen, wenn die erste Vorrichtung ermittelt, dass die Klasse der ersten Partikel Pilz ist, wobei das Steuersystem dafür ausgelegt ist, einen Polymerasekettenreaktionstest für virale Stoffe auszuwählen, wenn die erste Vorrichtung ermittelt, dass die Klasse der ersten Partikel Virus ist und/oder wobei das Steuersystem dafür ausgelegt ist, einen Polymerasekettenreaktionstest für toxische Stoffe auszuwählen, wenn die erste Vorrichtung ermittelt, dass die Klasse der ersten Partikel Toxin ist.

23. Detektionssystem nach Anspruch 21, **dadurch gekennzeichnet, dass** einer der von dem Steuersystem ausgewählten Tests einen Polymerasekettenreaktionstest für bakterielle Stoffe, einen Polymerasekettenreaktionstest für pilzartige Stoffe, einen Polymerasekettenreaktionstest für virale Stoffe und/oder einen Polymerasekettenreaktionstest für toxische Stoffe umfasst.

24. Detektionssystem nach Anspruch 1, **dadurch gekennzeichnet, dass** die zweite Vorrichtung eine Anordnung von Polymerasekettenreaktionsmodulen umfasst.

25. Detektionssystem nach Anspruch 24, **dadurch gekennzeichnet, dass** die Polymerasekettenreaktionsmodule in der Lage sind, gleichzeitig zu arbeiten.

26. Detektionssystem nach Anspruch 24, **dadurch gekennzeichnet, dass** die Polymerasekettenreaktionsmodule in der Lage sind, unabhängig voneinander zu arbeiten.

27. Detektionssystem nach Anspruch 1, **dadurch gekennzeichnet, dass** die zweite Vorrichtung dafür ausgelegt ist, einen Seitenstrom-Antikörper-Assay durchzuführen.

28. Detektionssystem nach Anspruch 27, **dadurch gekennzeichnet, dass** die zweite Vorrichtung einen Seitenstrom-Streifen umfasst.

29. Detektionssystem nach Anspruch 28, **dadurch gekennzeichnet, dass** die zweite Vorrichtung eine Bildgebungsquelle (44) umfasst, die dafür ausgelegt ist, den Seitenstrom-Streifen zu lesen.

30. Detektionssystem nach Anspruch 29, **dadurch gekennzeichnet, dass** die Bildgebungsquelle eine Photovervielfacherröhre und/oder eine CCD-Kamera umfasst.

31. Detektionssystem nach Anspruch 28, **dadurch gekennzeichnet, dass** das Steuersystem dafür ausgelegt ist, den Seitenstrom-Streifen basierend auf der von der ersten Vorrichtung ermittelten Klasse auszuwählen.

32. Detektionssystem nach Anspruch 1, **dadurch gekennzeichnet, dass** die zweite Vorrichtung dafür ausgelegt ist, einen kompetitiven Antikörper-Antigen-Assay durchzuführen.

33. Detektionssystem nach Anspruch 32, **dadurch gekennzeichnet, dass** die zweite Vorrichtung ein Luminorneter umfasst, das dafür ausgelegt ist, ein Ergebnis des kompetitiven Antikörper-Antigen-Assays zu lesen.

34. Detektionssystem nach Anspruch 32, **dadurch gekennzeichnet, dass** das Steuersystem dafür ausgelegt ist, den kompetitiven Antikörper-Antigen-Assay basierend auf der von der ersten Vorrichtung ermittelten Klasse auszuwählen.

35. Detektionssystem nach Anspruch 1, **dadurch gekennzeichnet, dass** die zweite Vorrichtung einen Oberflächenplasmonresonanzchip umfasst.

36. Detektionssystem nach Anspruch 35, **dadurch gekennzeichnet, dass** das Steuersystem dafür ausgelegt ist, den Oberflächenplasmonresonanzchip basierend auf der von der ersten Vorrichtung ermittelten Klasse auszuwählen.

37. Detektionssystem nach Anspruch 1, **dadurch gekennzeichnet, dass** die zweite Vorrichtung dafür ausgelegt ist, die Identität der zweiten Partikel in etwa einer Stunde oder weniger nach dem Auffangen der zweiten Partikel durch den Kollektor zu ermitteln.

38. Detektionssystem nach Anspruch 1, **dadurch gekennzeichnet, dass** das Steuersystem dafür ausgelegt ist, den Betrieb des Detektionssystems zu steuern.

39. Detektionssystem nach Anspruch 1, **dadurch gekennzeichnet, dass** das Steuersystem ein drahtloses Kommunikationssystem für die Fernsteuerung des Detektionssystems umfasst.

40. Detektionssystem nach Anspruch 1, **dadurch gekennzeichnet, dass** das Steuersystem dafür ausgelegt ist, den Test in der zweiten Vorrichtung zu initiieren, nachdem die erste Vorrichtung die Klasse der ersten Partikel ermittelt.

41. Detektionssystem nach Anspruch 1, welches weiterhin ein Gehäuse zum Umschließen mindestens eines Teils des Detektionssystems umfasst.

42. Detektionssystem nach Anspruch 41, **dadurch gekennzeichnet, dass** das Steuersystem dafür ausgelegt ist, eine Temperatur in dem Gehäuse zu steuern.

43. Detektionssystem nach Anspruch 41, **dadurch gekennzeichnet, dass** das Steuersystem dafür ausgelegt ist, in dem Gehäuse eine Temperatur in einem Bereich von etwa 10 °C bis 30 °C aufrecht zu erhalten.

44. Detektionssystem nach Anspruch 42, **dadurch gekennzeichnet, dass** das Steuersystem dafür ausgelegt ist, in dem Gehäuse eine Temperatur von etwa 18°C aufrecht zu erhalten.

45. Verfahren zum Analysieren aerogener Partikel, welches umfasst:
Nehmen von Proben der Umgebungsluft;
Analysieren erster Partikel aus der Umgebungsluft, um eine Klasse der ersten Partikel zu ermitteln;
Auffangen zweiter Partikel aus der Umgebungsluft;
Erzeugen einer flüssigen Probe, die die zweiten Partikel umfasst;
Auswählen eines Tests, um eine Identität der zweiten Partikel basierend auf der Klasse der ersten Partikel zu ermitteln;
Durchführen des ausgewählten Tests an der flüssigen Probe;
**dadurch gekennzeichnet, dass**
die Klasse aus der Gruppe bestehend aus Bakterien, Pilz, Virus und Toxin ausgewählt wird.

46. Verfahren nach Anspruch 45, welches weiterhin das Durchführen eines Polymerasekettenreaktionsassays für einen bakteriellen Stoff, wenn die Klasse Bakterien ist, das Durchführen eines Polymerasekettenreaktionsassays für einen pilzartigen Stoff, wenn die Klasse Pilz ist, das Durchführen eines Polymerasekettenreaktionsassays für einen viralen Stoff, wenn die Klasse Virus ist, und das Durchführen eines Polymerasekettenreaktionsassays für einen toxischen Stoff, wenn die Klasse Toxin ist, umfasst.

## Revendications

1. Système de détection (10), comprenant :
un premier dispositif (30) pour déterminer une classe de premières particules (5b) contenues dans un aérosol ;
un collecteur (20) pour capturer des deuxièmes particules (5a) contenues dans ledit aérosol ;
un deuxième dispositif (40) pour déterminer une identité desdites deuxièmes particules (5a) capturées par ledit collecteur (20) ; et
un système de commande (50) configuré de façon à sélectionner un test devant être effectué par le deuxième dispositif en fonction de la classe déterminée par le premier dispositif ;
**caractérisé en ce que :**
le premier dispositif est configuré de façon à sélectionner la classe parmi le groupe comprenant des bactéries, des champignons, des toxines, et des virus.

2. Système de détection selon la revendication 1, dans lequel les premières et deuxièmes particules sont des particules biologiques.

3. Système de détection selon la revendication 1, dans lequel le système de détection est configuré de façon à être portable.

4. Système de détection selon la revendication 1, dans lequel le système de détection est configuré de façon à être monté sur un véhicule.

5. Système de détection selon la revendication 1, dans lequel le système de détection est un système de détection portatif.

6. Système de détection selon la revendication 1, dans lequel le système de détection est configuré de façon à être monté sur un objet fixe.

7. Système de détection selon la revendication 1, dans lequel le système de détection est configuré de façon à être installé dans un bâtiment.

8. Système de détection selon la revendication 1, dans lequel le système de détection est configuré de façon à être installé dans un emplacement extérieur.

9. Système de détection selon la revendication 1, dans lequel une taille du système de détection est approximativement inférieure ou égale à 0,17 m³.

10. Système de détection selon la revendication 1, dans lequel le collecteur est configuré de façon à échantillonner de l'air ambiant.

11. Système de détection selon la revendication 1, dans lequel le collecteur est configuré de façon à capturer des particules respirables.

12. Système de détection selon la revendication 1, dans lequel le collecteur est configuré de façon à collecter des particules ayant une taille située dans une plage comprise entre approximativement 1 µm et approximativement 10 µm.

13. Système de détection selon la revendication 1, dans lequel le collecteur comprend un concentrateur humide.

14. Système de détection selon la revendication 1, dans lequel dans lequel le collecteur comprend un filtre sec (22).

15. Système de détection selon la revendication 14, comprenant de plus un mécanisme pour laver automatiquement le filtre sec.

16. Système de détection selon la revendication 1, dans lequel le collecteur est configuré de façon à générer un échantillon liquide contenant les deuxièmes particules.

17. Système de détection selon la revendication 16, dans lequel le collecteur est configuré de façon à délivrer l'échantillon liquide au deuxième dispositif.

18. Système de détection selon la revendication 1, dans lequel le premier dispositif est configuré de façon à échantillonner de l'air ambiant.

19. Système de détection selon la revendication 1, dans lequel le premier dispositif est configuré de façon à induire une fluorescence des premières particules et à analyser la fluorescence induite de façon à déterminer la classe des premières particules.

20. Système de détection selon la revendication 1, dans lequel le premier dispositif est configuré de façon à déterminer la classe des premières particules en approximativement 2 minutes ou moins.

21. Système de détection selon la revendication 1, dans lequel le deuxième dispositif comprend un module de réaction en chaîne de polymérase.

22. Système de détection selon la revendication 21, dans lequel le système de commande est configuré de façon à sélectionner un test de réaction en chaîne de polymérase pour des agents bactériens lorsque le premier dispositif détermine que la classe des premières particules est des bactéries, dans lequel le système de commande est configuré de façon à sélectionner un test de réaction en chaîne de polymérase pour des agents fongiques lorsque le premier dispositif détermine que la classe des premières particules est des champignons, dans lequel le système de commande est configuré de façon à sélectionner un test de réaction en chaîne de polymérase pour des agents viraux lorsque le premier dispositif détermine que la classe des premières particules est des virus, et/ou dans lequel le système de commande est configuré de façon à sélectionner un test de réaction en chaîne de polymérase pour des agents toxiques lorsque le premier dispositif détermine que la classe des premières particules est des toxines.

23. Système de détection selon la revendication 21, dans lequel l'un des tests sélectionnés par le système de commande comprend un test de réaction en chaîne de polymérase pour des agents bactériens, un test de réaction en chaîne de polymérase pour des agents fongiques, un test de réaction en chaîne de polymérase pour des agents viraux, et/ou un test de réaction en chaîne de polymérase pour des agents toxiques.

24. Système de détection selon la revendication 1, dans lequel le deuxième dispositif comprend un groupement de modules de réaction en chaîne de polymérase.

25. Système de détection selon la revendication 24, dans lequel les modules de réaction en chaîne de polymérase sont susceptibles de fonctionner simultanément.

26. Système de détection selon la revendication 24, dans lequel les modules de réaction en chaîne de polymérase sont susceptibles de fonctionner indépendamment.

27. Système de détection selon la revendication 1, dans lequel le deuxième dispositif est configuré de façon à effectuer une analyse d'anticorps à flux latéral.

28. Système de détection selon la revendication 27, dans lequel le deuxième dispositif comprend une bande à flux latéral.

29. Système de détection selon la revendication 28, dans lequel le deuxième dispositif comprend une source d'imagerie (44) configurée de façon à lire la bande à flux latéral.

30. Système de détection selon la revendication 20, dans lequel la source d'imagerie comprend un tube photomultiplicateur et/ou une caméra à dispositifs à couplage de charges.

31. Système de détection selon la revendication 28, dans lequel le système de commande est configuré de façon à sélectionner la bande à flux latéral en fonction de la classe déterminée par le premier dispositif.

32. Système de détection selon la revendication 1, dans lequel le deuxième dispositif est configuré de façon à effectuer une analyse anticorps-antigène compétitive.

33. Système de détection selon la revendication 32, dans lequel le deuxième dispositif comprend un luminomètre configuré de façon à lire un résultat de l'analyse anticorps-antigène compétitive.

34. Système de détection selon la revendication 32, dans lequel le système de commande est configuré de façon à sélectionner l'analyse anticorps-antigène compétitive en fonction de la classe déterminée par le premier dispositif.

35. Système de détection selon la revendication 1, dans lequel le deuxième dispositif comprend une puce de résonance à plasmons de surface.

36. Système de détection selon la revendication 35, dans lequel le système de commande est configuré de façon à sélectionner la puce de résonance à plasmons de surface en fonction de la classe déterminée par le premier dispositif.

37. Système de détection selon la revendication 1, dans lequel le deuxième dispositif est configuré de façon à déterminer l'identité des deuxièmes particules en approximativement une heure ou moins après que les deuxièmes particules aient été capturées par le collecteur.

38. Système de détection selon la revendication 1, dans lequel le système de commande est configuré de façon à commander le fonctionnement du système de détection.

39. Système de détection selon la revendication 1, dans lequel le système de commande comprend un système de communications sans fil pour une commande à distance du système de détection.

40. Système de détection selon la revendication 1, dans lequel le système de commande est configuré de façon à déclencher le test dans le deuxième dispositif après que le premier dispositif ait déterminé la classe des premières particules.

41. Système de détection selon la revendication 1, comprenant de plus une enceinte pour renfermer au moins une partie du système de détection.

42. Système de détection selon la revendication 41, dans lequel le système de commande est configuré de façon à commander la température dans l'enceinte.

43. Système de détection selon la revendication 41, dans lequel le système de commande est configuré de façon à maintenir une température dans l'enceinte dans une plage approximativement comprise entre 10° C et 30° C.

44. Système de détection selon la revendication 42, dans lequel le système de commande est configuré de façon à maintenir une température dans l'enceinte à approximativement 18° C.

45. Procédé pour analyser des particules portées dans l'air, comprenant:
l'échantillonnage de l'air ambiant;
l'analyse de premières particules à partir de l'air ambiant afin de déterminer une classe de premières particules;
la capture de deuxièmes particules à partir de l'air ambiant;
la génération d'un échantillon liquide qui comprend les deuxièmes particules;
la sélection d'un test pour déterminer une identité des deuxièmes particules en fonction de la classe des premières particules;
le fait de soumettre l'échantillon liquide au test sélectionné;
**caractérisé en ce que:**
le classe est sélectionnée parmi le groupe comprenant des bactéries, des champignons, des virus, et des toxines.

46. Procédé selon la revendication 45, comprenant de plus la réalisation d'une analyse de réaction en chaîne de polymérase pour un agent bactérien lorsque la classe est des bactéries, la réalisation d'une analyse de réaction en chaîne de polymérase pour un agent fongique lorsque la classe est des champignons, la réalisation d'une analyse de réaction en chaîne de polymérase pour un agent viral lorsque la classe est des virus, et la réalisation d'une analyse de réaction de chaîne de polymérase pour un agent toxique lorsque la classe est des toxines.
